Europäisches Patentamt

European Patent Office

Office européen des brevets

(11) Veröffentlichungsnummer: **0 281 021**
**A1**

## (12) EUROPÄISCHE PATENTANMELDUNG

(21) Anmeldenummer: 88102839.3

(22) Anmeldetag: 25.02.88

(51) Int. Cl.⁴ **E04B 5/58**

(30) Priorität: 26.02.87 DE 8702979 U

(43) Veröffentlichungstag der Anmeldung:
07.09.88 Patentblatt 88/36

(84) Benannte Vertragsstaaten:
**AT BE CH DE FR GB IT LI LU NL SE**

(71) Anmelder: **STERNBERG VERWALTUNGSGESELLSCHAFT MBH Üntropstrasse 1 D-5948 Schmallenberg 13 (Lenne)(DE)**

(72) Erfinder: **Sternberg, Meinolf Üntropstrasse 9 D-5948 Schmallenberg (Lenne)(DE)**

(74) Vertreter: **Goetz, Rupert et al Patentanwälte Wuesthoff- v. Pechmann-Behrens-Goetz Schweigerstrasse 2 D-8000 München 90(DE)**

(54) Spannelement für Deckenabhängungen.

(57) Das Spannelement hat ein Basisteil (1), von dem sich vier Schenkel (2, 3, 4, 5) paarweise divergierend wegerstrecken. Die Schenkel haben in einem Abstand vom Basisteil (1) je ein Loch (6, 7, 8, 9) und sind paarweise soweit elastisch zusammendrückbar, daß die Löcher (6, 7; 8, 9) jedes Paars Schenkel (2, 3; 4, 5) zum Ein-oder Verschieben eines steifen, im wesentlichen geraden Drahtes (10; 11) miteinander fluchten und daß die freigegebenen Schenkel (2, 3; 4, 5) jedes Paars den zugehörigen Draht an Rändern ihrer Löcher (6, 7; 8, 9) festklemmen. Jeder Schenkel (2, 3, 4, 5) weist an seinem vom Basisteil (1) abgewandten Ende eine Verlängerung (12, 13, 14, 15) auf, die derart abgekantet ist, daß die Verlängerungen (12, 13; 14, 15) jedes Paars zusammengehöriger Schenkel (2, 3; 4, 5) in entspanntem Zustand des Spannelements mindestens annähernd parallel sind.

Fig. 1

## Spannelement für Deckenabhängungen

Die Erfindung betrifft ein Spannelement für Deckenabhängungen mit einem Basisteil, von dem sich mindestens zwei Schenkel paarweise divergierend wegerstrecken, die in einem Abstand vom Basisteil je ein Loch aufweisen und paarweise soweit elastisch zusammendrückbar sind, daß die Löcher jedes Paars Schenkel zum Ein-oder Verschieben eines steifen, im wesentlichen geraden Drahtes miteinander fluchten und daß die freigegebenen Schenkel jedes Paars den zugehörigen Draht an Rändern ihrer Löcher festklemmen.

Solche Spannelemente sind üblicherweise in einem Stück aus Federstahlblech gestanzt und haben die Aufgabe, zwei als Befestigungsteile dienende parallele Drähte oder einen Draht und ein Befestigungsteil anderer Art derart einstellbar miteinander zu verbinden, daß der Abstand zwischen voneinander abgewandten, üblicherweise mit je einer Öse versehenen Befestigungsenden der Drähte bzw. zwischen einem solchen Befestigungsende und einem Befestigungsteil anderer Art veränderbar ist.

Bei bekannten Spannelementen dieser Gattung sind die Schenkel gerade und divergieren somit bis zu ihren Enden hin. Die Enden sind scharfkantig, da sie im allgemeinen aus Kostengründen nach dem Stanzen nicht nachbearbeitet werden können. Vor allem ein Paar Schenkel, an dessen Schenkelenden der beim Stanzen unvermeidlich entstehende Grat außen liegt, macht die Handhabung der bekannten Spannelemente unangenehm. Dies gilt besonders für das Zusammendrücken paarweise zusammengehöriger Schenkel zum Ein-oder Verschieben des zugehörigen Drahtes. Die Stanzgrate an den Schenkelenden drücken sich dabei in die Fingerkuppen des Handwerkers ein.

Der Erfindung liegt die Aufgabe zugrunde, ein Spannelement der beschriebenen Gattung derart weiterzubilden, daß es leichter zu handhaben ist.

Die Aufgabe ist erfindungsgemäß dadurch gelöst, daß jeder Schenkel an seinem vom Basisteil abgewandten Ende eine Verlängerung aufweist, die derart abgekantet ist, daß die Verlängerungen jedes Paars zusammengehöriger Schenkel in entspanntem Zustand des Spannelements mindestens annähernd parallel sind.

Damit wird erreicht, daß das erfindungsgemäße Spannelement an den Verlängerungen seiner Schenkel leicht und sicher erfaßt werden kann und die Kanten an den Enden der Verlängerungen auch beim kräftigen Zusammendrücken der Schenkel keinen örtlich konzentrierten und dadurch unangenehmen Gegendruck auf die Finger des Handwerkers ausüben.

Ein Ausführungsbeispiel der Erfindung wird im folgenden anhand schematischer Zeichnungen mit weiteren Einzelheiten erläutert. Es zeigt:

Fig. 1 ein erfindungsgemäßes Spannelement mit zwei von ihm festgespannten Drähten in Vorderansicht,

Fig. 2 die Seitenansicht in Richtung des Pfeils II in Fig. 1,

Fig. 3 die Draufsicht in Richtung des Pfeils III in Fig. 1 und

Fig. 4 das Spannelement alleine in entspanntem Zustand.

Das dargestellte Spannelement ist einstückig aus Federstahlblech ausgestanzt und hat ein ebenes, annähernd quadratisches Basisteil 1, von dem sich zwei Paar Schenkel 2, 3 und 4, 5 in entgegengesetzten Richtungen wegerstrecken. Die Schenkel 2 und 3 sowie 4 und 5 jedes Paars divergieren und schließen mit der Ebene des Basisteils 1 je einen Winkel von ungefähr 60° ein. Jeder der Schenkel 2, 3, 4 und 5 hat in einem bestimmten, für alle Schenkel gleichen Abstand vom Basisteil 1 ein kreisförmiges Loch 6 bzw. 7 bzw. 8 bzw. 9, das sich durch den betreffenden Schenkel im rechten Winkel zu dessen Ebene hindurcherstreckt.

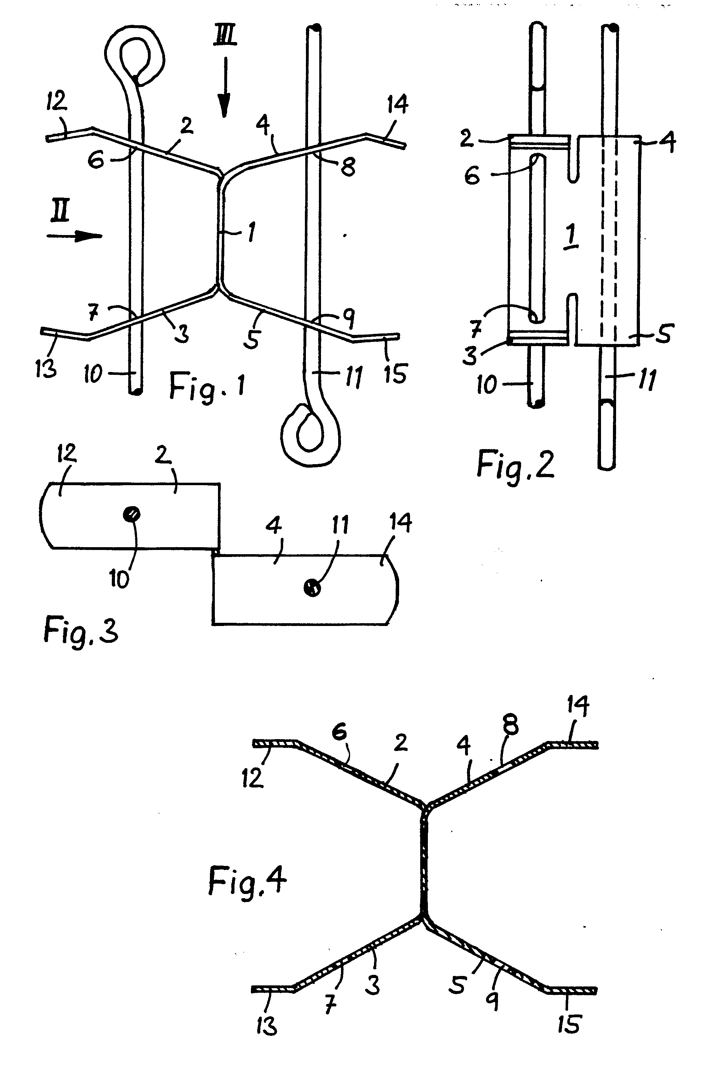

In der Benutzungsstellung gemäß Fig. 1 bis 3 sind die paarweise zusammengehörigen Schenkel 2 und 3 sowie 4 und 5 gegen ihren elastischen Widerstand derart zueinander hin gebogen, daß die Löcher 6 und 7 bzw. 8 und 9 jedes Schenkelpaars miteinander fluchten. Durch die paarweise zusammengehörigen Löcher 6 und 7 sowie 8 und 9 ist je ein im wesentlichen gerader Draht 10 bzw. 11 hindurchgesteckt. Jeder dieser Drähte 10 und 11 ist durch die elastischen Rückstellkräfte der beiden zugehörigen Schenkel 2 und 3 bzw. 4 und 5 in deren Löchern 6 und 7 bzw. 8 und 9 festgeklemmt und läßt sich nur dann verschieben, wenn die Schenkel des betreffenden Schenkelpaars durch äußere Kräfte zusammengedrückt werden.

Jeder der Schenkel 2, 3, 4 und 5 hat eine Verlängerung 12 bzw. 13 bzw. 14 bzw. 15. Die Verlängerungen 12 und 13 sowie 14 und 15 paarweise zusammengehöriger Schenkel 2 und 3 sowie 4 und 5 sind im entspannten Zustand des Spannelements, der in Fig. 4 dargestellt ist, parallel zueinander angeordnet und lassen sich deshalb besonders leicht zwischen zwei Fingern einer Hand zusammendrücken.

Abweichend vom dargestellten Ausführungsbeispiel können beide Schenkelpaare 2, 3 und 4, 5 nach der selben Seite vom Basisteil 1 wegragen, ohne daß sich an den Vorteilen der Verlängerungen 12 bis 15 etwas ändert. Bei einer anderen Ausführungsform ist nur ein Schenkelpaar 2, 3 mit Verlängerungen 12, 13 vorgesehen; das in den Zeichnungen dargestellte zweite Schenkelpaar 4, 5 ist durch ein in der Ebene des Basisteils 1 liegendes Befestigungselement ersetzt.

## Ansprüche

Spannelement für Deckenabhängungen mit einem Basisteil (1), von dem sich mindestens zwei Schenkel (2, 3, 4, 5) paarweise divergierend wegerstrecken, die in einem Abstand vom Basisteil (1) je ein Loch (6, 7, 8, 9) aufweisen und paarweise soweit elastisch zusammendrückbar sind, daß die Löcher (6, 7; 8, 9) jedes Paars Schenkel (2, 3; 4, 5) zum Ein-oder Verschieben eines steifen, im wesentlichen geraden Drahtes (10; 11) miteinander fluchten und daß die freigegebenen Schenkel (2, 3; 4, 5) jedes Paars den zugehörigen Draht an Rändern ihrer Löcher (6, 7; 8, 9) festklemmen, dadurch **gekennzeichnet,** daß jeder Schenkel (2, 3, 4, 5) an seinem vom Basisteil (1) abgewandten Ende eine Verlängerung (12, 13, 14, 15) aufweist, die derart abgekantet ist, daß die Verlängerungen (12, 13; 14, 15) jedes Paars zusammengehöriger Schenkel (2, 3; 4, 5) in entspanntem Zustand des Spannelements mindestens annähernd parallel sind.

Fig. 1

Fig. 2

Fig. 3

Fig. 4

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | GB-A-1 210 497 (R.G.S.) <br> * Seite 2, Zeilen 51-59,64-70; Figuren 9,10 * <br> --- | 1 | E 04 B 5/58 |
| X | DE-U-8 628 705 (PROFIL-VERTRIEB) <br> * Seite 7, Absätze 2,3,4; Seite 8, Absätze 1,2; Figuren 1-3 * <br> --- | 1 | |
| A | DE-U-8 505 171 (HOMACO) <br> * Seite 7, Absatz 6; Seite 8, Absatz 2; Seite 11, Absatz 2; Seiten 12-14; Figuren 1-5 * <br> --- | 1 | |
| A | FR-A-1 445 861 (HANSEN) <br> * Figuren 3,4 * <br> ----- | 1 | |

RECHERCHIERTE SACHGEBIETE (Int. Cl.4)

E 04 B

Der vorliegende Recherchenbericht wurde für alle Patentansprüche erstellt

| Recherchenort | Abschlußdatum der Recherche | Prüfer |
|---|---|---|
| DEN HAAG | 25-05-1988 | HENDRICKX X. |